Europäisches Patentamt

European Patent Office

Office européen des brevets

(19)

(11) **EP 0 800 209 B1**

(12) **FASCICULE DE BREVET EUROPEEN**

(45) Date de publication et mention
de la délivrance du brevet:
**11.09.2002   Bulletin 2002/37**

(51) Int Cl.⁷: **H01L 23/58**

(21) Numéro de dépôt: **97400732.0**

(22) Date de dépôt: **28.03.1997**

(54) **Dipositif de sécurité d'une pastille semi-conductrice**

Schutzanordnung für ein Halbleiterplättchen

Safety device for a semi-conductor chip

(84) Etats contractants désignés:
**DE ES GB IT**

(30) Priorité:  **01.04.1996  FR 9604151**

(43) Date de publication de la demande:
**08.10.1997   Bulletin 1997/41**

(73) Titulaire: **SCHLUMBERGER Systèmes
92120 Montrouge (FR)**

(72) Inventeur: **Rigal, Vincent
92330 Sceaux (FR)**

(74) Mandataire: **Lemoyne, Didier
Schlumberger Industries,
Propriété Intellectuelle,
50, avenue Jean Jaurès,
BP 620-04
92542 Montrouge-Cedex (FR)**

(56) Documents cités:
**EP-A- 0 510 433          WO-A-96/16378
DE-A- 4 018 688**

• **"PARTITIONING FUNCTION AND PACKAGING
OF INTEGRATED CIRCUITS FOR PHYSICAL
SECURITY OF DATA" juin 1989 , IBM
TECHNICAL DISCLOSURE BULLETIN, VOL. 32,
NR. 1, PAGE(S) 46 - 49 XP000033241 * le
document en entier ***

Printed by Jouve, 75001 PARIS (FR)

## Description

La présente invention concerne un dispositif de sécurité destiné à empêcher l'accès à des informations confidentielles contenues dans une pastille semi-conductrice et un procédé d'utilisation du dispositif.

L'invention trouve une application particulièrement avantageuse dans le domaine de la sécurisation des systèmes à mémoire électronique utilisés en télévision cryptée ou pour effectuer des transactions financières, tels que les terminaux de paiement portables.

Ces systèmes comportent des dispositifs de sécurité généralement implantés dans des modules électroniques, dits de sécurité applicative (SAM). Ces modules sont d'une très grande importance car ils contiennent des informations confidentielles, comme des clés bancaires, dont la découverte permettrait l'accès à l'ensemble du système de transactions électroniques.

Les informations confidentielles à protéger sont le plus souvent inscrites dans une couche électronique d'une pastille semi-conductrice, ou puce, une couche de passivation recouvrant généralement la couche électronique sensible.

Il est possible que la couche de passivation ne soit pas un obstacle suffisant à l'accès aux informations confidentielles, notamment si des moyens sophistiqués sont utilisés pour lire les informations à travers la couche de passivation. Ces moyens de lecture peuvent par exemple mettre en oeuvre des techniques exploratoires du type à faisceaux de particules.

Parmi les dispositifs de sécurité existants destinés à sauvegarder lesdites informations confidentielles, on en connaît qui ont recours à des capteurs d'intrusion traditionnels aptes à protéger une enceinte dans laquelle est enfermée la pastille semi-conductrice contenant les informations.

On connaît également des dispositifs permettant de protéger directement la pastille semi-conductrice contre une lecture extérieure à l'aide de moyens de deux types.

Le premier consiste à masquer le dessin de la pastille semi-conductrice à protéger par exemple par une métallisation, une grille de faux circuits ou une couche de carbone diamant.

Le second moyen consiste à mémoriser les informations confidentielles dans une mémoire volatile du type RAM et à les combiner éventuellement avec des nombres aléatoires modifiés en permanence. Les informations ne sont alors accessibles que par l'intermédiaire d'un système d'exploitation qui en contrôle l'accès. Les principes utilisés sont identiques à ceux des cartes à microprocesseur. Selon ce second type de moyens de protection, les informations contenues dans la mémoire RAM sont systématiquement perdues si l'alimentation de la pastille semi-conductrice est interrompue. Dans ce cas, l'accès aux informations n'est pas totalement impossible si on connaît :

- la manière d'éliminer l'enrobage du boîtier de la pastille semi-conductrice sous tension, sans créer de courts-circuits qui entraîneraient la perte des informations,
- le schéma exact de la pastille semi-conductrice,
- la table de brouillage de la mémoire,
- l'adresse des informations confidentielles dans la mémoire,
- la manière d'enregistrer et d'analyser correctement le bus d'adresses et de données en temps réel.

Cependant, les différentes techniques mentionnées ci-dessus ont l'inconvénient soit d'être inefficaces si des moyens très sophistiqués de fraude sont mis en oeuvre, soit d'être onéreuses dans le cas notamment de l'utilisation de masque au carbone-diamant.

Le document WO-A-96 16378, compris dans l'état de la technique au sens d'article 54(3) CBE, décrit un dispositif de sécurité comprenant une pastille semi-conductrice protégée et une pastille semi-conductrice protectrice disposées en regard l'une de l'autre et séparées par une résine contenant des billes de polymère enrobées d'or.

Aussi, le problème technique à résoudre par l'objet de la présente invention est de proposer un dispositif de sécurité destiné à empêcher l'accès à des informations confidentielles contenues dans une pastille semi-conductrice, dite pastille protégée, dispositif qui offrirait une efficacité de protection améliorée tout en restant compatible avec les procédés de fabrication standardisés.

La solution au problème technique posé consiste, selon la présente invention, en ce que ledit dispositif comprend ladite pastille protégée et une deuxième pastille semi-conductrice, dite pastille protectrice, lesdites pastilles étant disposées en regard l'une de l'autre et connectées entre elles par des plots de communication, la pastille protégée étant apte à être reliée à des circuits extérieurs par l'intermédiaire de la pastille protectrice, et en ce que les deux pastilles semi-conductrices sont séparées par une résine semi-conductrice de résistivité électrique inhomogène, la pastille protectrice étant munie, d'une part, de moyens de mesure d'une pluralité de résistances à travers la résine semi-conductrice, et, d'autre part, de moyens de détermination, au moins à partir des résistances mesurées, d'une clé de cryptage destinée à être communiquée à la pastille protégée pour protection desdites informations confidentielles.

De plus, l'invention prévoit un procédé d'utilisation dudit dispositif.

Dans un premier mode de réalisation de l'invention, lesdits moyens de détermination comprennent des moyens de traitement des résistances mesurées, aptes à établir une clé de cryptage Kr, dite clé résistive. A titre d'exemple, lesdits moyens de traitement sont des moyens de comparaison des résistances mesurées.

Ainsi, lors de l'initialisation du dispositif de sécurité de l'invention, les moyens de mesure de la pastille protectrice mesurent un certain nombre de résistances à travers la résine semi-conductrice. Les valeurs des résistances ainsi mesurées sont traitées par les moyens de détermination afin de constituer la clé résistive Kr, laquelle est alors communiquée à la pastille protégée par les plots de communication. Ultérieurement, la clé Kr sera utilisée par ladite pastille protégée pour crypter certaines informations confidentielles, avant de les stocker dans une mémoire non volatile, puis pour décrypter lesdites informations avant de les utiliser.

Dans cette configuration, une attaque physique de la pastille protégée ne pourrait donner accès qu'à des informations non sensibles ou à des informations cryptées. Le décryptage suppose la connaissance de la clé Kr. Or l'attaque physique suppose l'accès à la surface active de la pastille, donc la destruction de la couche semi-conductrice, ce qui interdit définitivement la reconstruction de la clé résistive Kr.

D'une manière générale, et indépendamment des autres modes de réalisation qui vont maintenant être présentés, le fonctionnement du dispositif de sécurité de l'invention sera tel que les moyens de mesure et les moyens de détermination sont mis en oeuvre dès l'initialisation du dispositif et la clé de cryptage ainsi déterminée immédiatement communiquée à la pastille protégée.

Dans un deuxième mode de réalisation de l'invention, les moyens de détermination comprennent en outre une clé secondaire KE, stockée dans une mémoire non volatile de la pastille protectrice, ladite clé de cryptage destinée à être communiquée à la pastille protégée étant une combinaison de la clé résistive Kr et de la clé secondaire KE. Ce mode de réalisation permet de faire échec à une attaque du dispositif dans laquelle la pastille protectrice serait retirée, par usinage par exemple, jusqu'à ne laisser que la résine semi-conductrice. La clé résistive Kr pourrait être déterminée par mesure des résistances, sans parvenir toutefois à reconstituer la clé de cryptage complète puisque par hypothèse la clé secondaire KE ne serait pas connue.

Selon un autre mode de réalisation visant au même résultat, les moyens de mesure effectuent un grand nombre de mesures de résistances tandis que la pastille protectrice dispose d'une information CI qui lui est propre, définissant une liste des résistances à utiliser pour la détermination de la clé résistive Kr. De cette manière, l'attaque par usinage est également rendue inopérante car le fraudeur ne saura pas déduire la clé résistive Kr de la carte des résistances.

Selon une variante de ce dernier mode de réalisation, les moyens de mesure ne mesurent que les résistances utiles dont la liste dépend de l'information CI. On peut même prévoir que la clé résistive Kr est combinée à CI pour constituer une deuxième clé résistive K'r. Dans toutes ces variantes, la fraude par usinage est inopérante.

Un premier perfectionnement consiste à munir la pastille protégée d'un mécanisme d'alarme. Cela permet de détecter des tentatives de fraude et de prendre des mesures comme l'effacement d'informations sensibles.

A cet effet, les moyens de mesure et les moyens de détermination de la pastille protectrice établissent, à l'initialisation du dispositif, une deuxième clé résistive KA, dite clé d'alarme, qui est inscrite dans ladite mémoire non volatile de la pastille protectrice, et en ce que ladite deuxième clé résistive est à nouveau mesurée, à chaque mise sous tension du dispositif, et comparée à la valeur KA mémorisée, la clé secondaire KE étant effacée en cas de comparaison négative, la clé résistive Kr étant déterminée et communiquée à la pastille protégée dans le cas contraire. Afin de fiabiliser ce mode de réalisation, plusieurs perfectionnements peuvent y être apportés :

- La clé KA est mesurée à partir de résistances sans corrélation avec celles utilisées pour déterminer la clé Kr, afin qu'on ne puisse déduire Kr de KA.
- La clé KA est mesurée plusieurs fois, jusqu'à un nombre maximal.
- A chaque mesure de KA, une information est inscrite dans la mémoire non volatile de la pastille protectrice, par exemple mise à jour du nombre d'essais encore autorisés s'il en reste, ou effacement de la clé secondaire KE.
- Plutôt que de stocker la clé KA dans sa totalité, on peut n'en stocker qu'un condensé (CRC, hashing) et faire un test de conformité.
- La clé résistive Kr n'est pas mesurée si la valeur mesurée de KA n'est pas conforme.

Dans un troisième mode de réalisation de l'invention, les moyens de mesure et les moyens de détermination établissent, à l'initialisation du dispositif, une deuxième clé résistive KS de secours qui est inscrite dans ladite mémoire non volatile de la pastille protectrice, et des moyens de calcul sont prévus pour calculer une troisième clé KD à partir des clés résistives Kr et KS d'une manière telle que la clé résistive Kr puisse être calculée à partir des clés KS et KD, la clé KD étant communiquée à la pastille protégée, puis stockée dans sa mémoire.

A titre d'exemple, lesdits moyens de calcul peuvent être un "ou exclusif', on a dans ce cas :

$$KD = Kr + KS$$

et

$$Kr = KD + KS$$

L'une des pastilles peut être munie d'un mécanisme permettant de vérifier la valeur Kr. On peut utiliser notamment un mécanisme à base de somme de contrôle (check-sum) calculée par la pastille protectrice et stockée par la pastille protégée. Il est essentiel qu'il soit impossible de déduire la clé Kr de cette somme de contrôle. Il est donc préférable que la longueur de la somme de contrôle soit très courte par rapport à celle de la clé Kr.

Lors de la mise en route du dispositif, la pastille considérée vérifie la clé Kr. Si le résultat n'est pas satisfaisant, elle demande la clé de secours KS et est alors en mesure de reconstituer Kr connaissant KD. Ceci constitue un mécanisme de recouvrement en cas d'erreur de mesure ou de dérive de Kr.

Un second perfectionnement consiste en ce que la puce protégée, au moment où elle détecte que Kr est erronée en informe le monde extérieur. Ceci peut permettre de fonctionner en mode dégradé, avec KS, tout en préparant le remplacement du dispositif. Il est également possible de limiter le mode dégradé dans le temps, la puce protégée s'invalidant elle-même après un certain nombre d'utilisations en mode dégradé.

Selon un autre mode de mise en oeuvre de l'invention, la liste des résistances à utiliser est établie par la pastille protectrice lors de l'initialisation du dispositif en fonction des résistances mesurées. Ladite liste est inscrite dans une mémoire non volatile de la pastille protectrice et vient compléter l'information CI ou en tient lieu. Bien entendu, après initialisation du dispositif, toute inscription de listes dans ladite mémoire non volatile est inhibée, par exemple par un fusible physique ou logique.

Selon un premier exemple d'application, ladite liste comporte des résistances de valeurs suffisamment éloignées. Ceci évite qu'un changement mineur des valeurs de résistances ne viennent modifier la clé résistive Kr.

Selon un deuxième exemple d'application, ladite liste comporte des résistances de valeurs de même ordre de grandeur. Ceci évite qu'un fraudeur, parvenant à séparer les deux pastilles semi-conductrices et venant mesurer, par des sondes de surface, les résistances de la résine, ne puisse en déduire la clé résistive Kr.

Enfin, il peut également être prévu que ladite liste comporte des résistances de valeurs contenues dans une plage donnée, pour cumuler les deux exemples précédents.

La description qui va suivre en regard des dessins annexés, donnés à titre d'exemples non limitatifs, fera bien comprendre en quoi consiste l'invention et comment elle peut être réalisée.

La figure 1 est une vue de côté d'un dispositif de sécurité conforme à l'invention.

La figure 2 est une vue de dessus d'un premier agencement des plots de mesure de la pastille protectrice du dispositif de sécurité de la figure 1.

La figure 3 est une vue de dessus d'un deuxième agencement des plots de mesure de la figure 2.

La figure 4 est une vue de dessus d'une variante du dispositif de sécurité de la figure 1.

La figure 5 est une vue de côté du dispositif de sécurité de la figure 4.

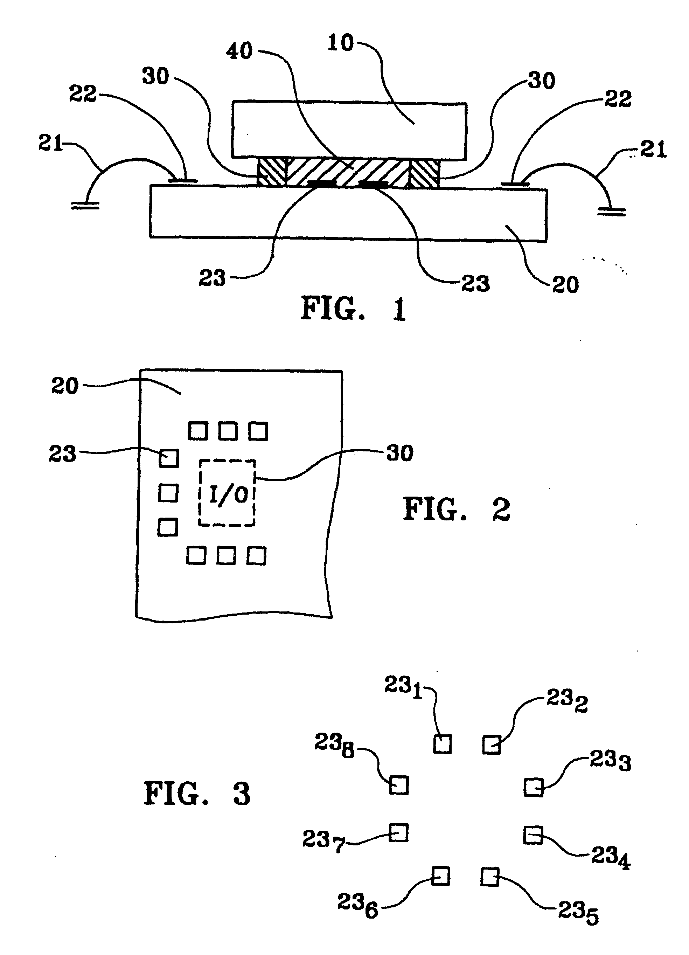

Le dispositif de sécurité représenté en vue de côté sur la figure 1 est destiné à empêcher l'accès à des informations confidentielles contenues dans une pastille semi-conductrice 10, dite pastille protégée. La pastille 10 peut être un micro-contrôleur standard muni d'une mémoire effaçable électriquement (EEPROM ou flash EPROM), d'une mémoire volatile (RAM) ainsi que de capacités de cryptage.

Comme on peut le voir sur la figure 1, ledit dispositif de sécurité comporte également une deuxième pastille semi-conductrice 20, dite pastille protectrice, qui peut être plus grande que la pastille protégée 10.

Les deux pastilles semi-conductrices sont disposées en regard l'une de l'autre et connectées entre elles par des plots 30 de communication. La pastille protectrice 20 est reliée à des circuits extérieurs, non représentés, par des fils 21 de connexion soudés sur des plots 22 de connexion aménagés sur la surface de la pastille 20. De cette manière, la pastille protégée 10 est apte à être reliée auxdits circuits extérieurs par l'intermédiaire de la pastille protectrice 20, via les plots 30 de communication.

La figure 1 montre par ailleurs que les deux pastilles semi-conductrices 10 et 20 sont séparées par une résine semi-conductrice 40 de résistivité électrique inhomogène. La pastille protectrice 20 est munie de moyens de mesure d'au moins un jeu d'une pluralité de résistances à travers la résine semi-conductrice.

Cette résine peut être constituée par exemple d'une base de polymère chargée de particules métalliques dont la répartition est aléatoire. On choisira avantageusement des particules allongées. La résine de base peut être en résine epoxy. Selon une variante de réalisation, la couche de résine reçoit un traitement thermique inhomogène, par exemple par application de spots laser aléatoires.

Puis, à partir des résistances ainsi mesurées, des moyens de détermination permettent de constituer une clé de cryptage destinée à être communiquée à la pastille protégée 10 pour protection des informations confidentielles.

Sur l'exemple de réalisation de la figure 1, lesdits moyens de mesure sont formés par des plots 23 de mesure en contact électrique avec la résine semi-conductrice 40, les résistances étant mesurées par couple de plots de mesure d'une manière identique à celle décrite dans la demande de brevet français FR-A-2 738 970 au nom de la demanderesse.

Les moyens de détermination de la clé de cryptage comprennent, de façon générale, des moyens de traitement des résistances mesurées, aptes à établir une clé de cryptage Kr purement résistive. On se reportera également à la demande de brevet français précitée dans laquelle des moyens de traitement particuliers sont décrits. Rappelons seulement que le traitement peut consister à comparer des couples de résistances mesurées et à affecter un bit 1 ou 0 selon que le résultat de la comparaison est positive ou négative. La liste des couples de résistances à mesurer et à comparer pour la détermination de la clé résistive Kr est établie par la pastille protectrice 20 en fonction d'une information CI qui lui est propre. En particulier, deux couples de plots de mesure dont les résistances doivent être comparées peuvent être choisies de façon à avoir un plot de mesure commun.

La clé de cryptage des informations confidentielles de la pastille protégée 10 peut être simplement réalisée par la seule clé résistive Kr. Cependant, afin d'augmenter le degré de sécurisation du dispositif, il y a avantage à combiner la clé Kr avec d'autres clés, telles qu'une clé secondaire KE stockée en mémoire de la pastille protectrice ou encore d'autres clés résistives comme les clés KA et Ks qui ont été décrites dans la partie introductive de la demande, à laquelle on se réfèrera pour une description plus complète et un exposé des différents modes de réalisation et variantes.

Selon un mode de réalisation du dispositif de sécurité de l'invention, certains plots 23 de mesure sont disposés à proximité des plots 30 de communication entre les deux pastilles 10, 20, voire même les plots 23 de mesure peuvent entourés lesdits plots 30 de communication comme cela est représenté sur la figure 2 dans le cas où la pastille protégée 10 est un micro-contrôleur classique utilisant une entrée série I/O laquelle est entourée de cette façon. Bien entendu, si le dispositif comporte plusieurs plots 30 de communication, chacun d'entre eux est protégé d'une manière analogue.

On peut également observer sur la figure 2 que les plots 23 de mesure sont, de préférence, disposés entre le plot 30 de communication à protéger et le bord de la pastille protectrice 20. En cas d'introduction d'une sonde par un fraudeur jusqu'au plot I/O entre les deux pastilles, ce qui lui permettrait de connaître la clé résistive Kr lors de sa transmission, les mesures de résistances seraient modifiées et Kr faussée. Dans le cas où la clé Kr est déduite de comparaisons entre résistances, les valeurs mesurées autour du plot I/O sont comparées à des valeurs mesurées vers le centre de la pastille 20 dans une zone difficile à atteindre par une sonde.

Avantageusement, la dimension de plots 23 de mesure est choisie inférieure à la distance entre deux plots voisins. De même, il est préférable de choisir les plots 23 de mesure de petite taille, de l'ordre de grandeur de l'épaisseur de la couche 40 de résine semi-conductrice. Enfin, les résistances à mesurer auront, de préférence, une longueur supérieure à la taille des plots 23 de mesure et comprise entre 1 et 20 fois l'épaisseur de la résine semi-conductrice.

Ainsi que le montre la figure 3, les plots 23 de mesure sont groupés en bloc de 6 à 10, ici 8 référencés $23_1$ à $23_8$. La pastille protectrice 20 compare deux résistances mesurées entre deux couples de plots d'un même bloc. D'une manière générale, la comparaison est préférable à la mesure en valeur absolue car, d'une part, elle évite d'intégrer sur la pastille protectrice 20 des circuits analogiques, et, d'autre part, elle est moins sensible à une modification de résistivité de la couche de résine semi-conductrice 40.

En particulier, un changement de température ne modifie pas la hiérarchie des valeurs.

D'une manière générale, les couples de plots de mesure sont choisis de telle sorte que la longueur des deux résistances à comparer soit du même ordre de grandeur. Sur la figure 3, on choisira par exemple de comparer, le couple $23_1$- $23_6$ avec le couple $23_2$ - $23_4$ ou le couple $23_1$ - $23_4$ mais pas avec le couple $23_1$ - $23_2$.

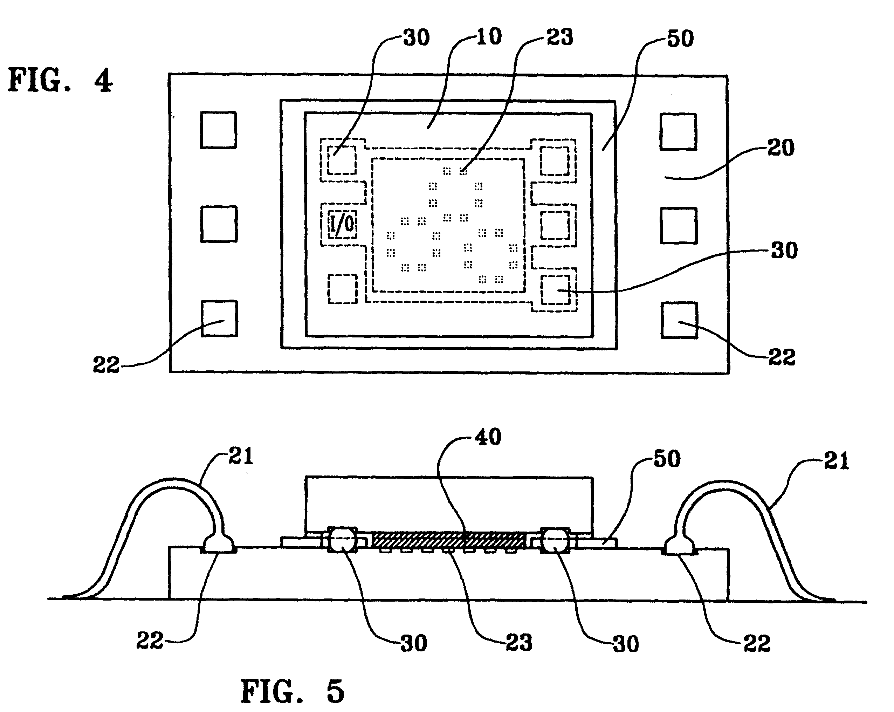

Selon la variante de réalisation montrée aux figures 4 et 5, un anneau 50 de garde est formé entre les plots 30 de communication et au moins la projection de la surface de la pastille protégée 10 sur la pastille protectrice 20.

Cet anneau 50 de garde est porté à un potentiel donné lors de l'assemblage de la pastille protégée 10. En cas d'introduction par un fraudeur d'une sonde jusqu'à un plot 30 de communication entre les deux pastilles, celui-ci serait porté au potentiel de l'anneau 50 de garde et la transmision serait inopérante.

## Revendications

1. Dispositif de sécurité destiné à empêcher l'accès à des informations confidentielles contenues dans une pastille semi-conductrice (10), dite pastille protégée, ledit dispositif comprenant ladite pastille protégée (10) et une deuxième pastille semi-conductrice (20), dite pastille protectrice, lesdites pastilles (10, 20) étant disposées en regard l'une de l'autre et connectées entre elles par des plots (30) de communication, la pastille protégée (10) étant reliée à des circuits extérieurs par l'intermédiaire de la pastille protectrice (20), et en ce que les deux pastilles semi-conductrices (10, 20) sont séparées par une résine semi-conductrice (40) de résistivité électrique inhomogène, la pastille protectrice (20) étant munie, d'une part, de moyens de mesure d'une pluralité de résistances à travers la résine semi-conductrice (40), et, d'autre part, de moyens de détermination, au moins à partir des résistances mesurées, d'une clé de cryptage destinée à être communiquée à la pastille protégée (10) pour protection desdites informations confidentielles.

2. Dispositif de sécurité selon la revendication 1, **caractérisé en ce que** lesdits moyens de détermination comprennent des moyens de traitement des résistances mesurées, aptes à établir une clé de cryptage, dite clé résistive (Kr).

3. Dispositif de sécurité selon la revendication 2, **caractérisé en ce que** lesdits moyens de traitement sont des moyens de comparaison des résistances mesurées.

4. Dispositif de sécurité selon l'une des revendications 2 ou 3, **caractérisé en ce que** les moyens de détermination comprennent en outre une clé secondaire (KE), stockée dans une mémoire non volatile de la pastille protectrice, ladite clé de cryptage destinée à être communiquée à la pastille protégée étant une combinaison de la clé résistive (Kr) et de la clé secondaire (KE).

5. Dispositif de sécurité selon l'une quelconque des revendications 1 à 4, **caractérisé en ce que** la pastille protectrice (20) dispose d'une information (CI) qui lui est propre, définissant une liste des résistances à utiliser pour la détermination de la clé résistive (Kr).

6. Dispositif de sécurité selon la revendication 5, **caractérisé en ce que** les moyens de mesure sont destinés à ne mesurer que les résistances utiles dont la liste dépend de ladite information (CI).

7. Dispositif de sécurité selon les revendications 2 et 6, **caractérisé en ce que** les moyens de détermination sont destinés à combiner la clé résistive (Kr) à ladite information (CI) pour constituer une deuxième clé de cryptage résistive (K'r).

8. Dispositif de sécurité selon la revendication 4, **caractérisé en ce que** les moyens de mesure et les moyens de détermination sont destinés à établir, à l'initialisation du dispositif, une deuxième clé résistive, dite clé d'alarme (kA), qui est inscrite dans ladite mémoire non volatile de la pastille protectrice (20), et sont de plus destinés à mesuser ladite deuxième clé résistive à chaque mise sous tension du dispositif, et à la comparer à la valeur mémorisée, à effacer la clé secondaire (KE) en cas de comparaison négative, ou à déterminer la clé résistive (Kr) et à la communiquer à la pastille protégée (10) dans le cas contraire.

9. Dispositif de sécurité selon la revendication 4, **caractérisé en ce que** les moyens de mesure et les moyens de détermination sont destinés à établir, à l'initialisation du dispositif, une deuxième clé résistive de secours (Ks) qui est inscrite dans ladite mémoire non volatile de la pastille protectrice (20), et **en ce que** des moyens de calcul sont prévus pour calculer une troisième clé (KD) à partir de la clé résistive (Kr) et de la deuxième clé résistive de secours (Ks) d'une manière telle que la clé résistive (Kr) puisse être calculée à partir de la deuxième clé résistive de secours (Ks) et de la troisième clé (KD), la troisième clé (KD) étant communiquée à la pastille protégée (10) puis stockée dans sa mémoire.

10. Procédé d'utilisation du dispositif de sécurité selon une quelconque des revendications 1 à 9, **caractérisé en ce que** la liste des résistances à utiliser est établie par la pastille protectrice (20) lors de l'initialisation du dispositif en fonction des résistances mesurées.

11. Procédé d'utilisation du dispositif de sécurité selon la revendication 10, **caractérisé en ce que** ladite liste est inscrite dans une mémoire non volatile de la pastille protectrice (20).

12. Procédé d'utilisation du dispositif de sécurité selon la revendication 11, **caractérisé en ce que**, après initialisation du dispositif, toute inscription de liste dans ladite mémoire non volatile est inhibée.

13. Procédé d'utilisation du dispositif de sécurité selon l'une quelconque des revendications 10 à 12, **caractérisé en ce que** ladite liste comporte des résistances de valeurs suffisamment éloignées.

14. Procédé d'utilisation du dispositif de sécurité selon l'une quelconque des revendications 10 à 12, **caractérisé en ce que** ladite liste comporte des résistances de valeurs de même ordre de grandeur.

15. Procédé d'utilisation du dispositif de sécurité selon l'une quelconque des revendications 10 à 12, **caractérisé en ce que** ladite liste comporte des résistances de valeurs contenues dans une plage donnée.

16. Procédé d'utilisation du dispositif de sécurité selon l'une quelconque des revendications 1 à 15, **caractérisé en ce que** les moyens de mesure et les moyens de détermination sont mis en oeuvre dès l'initialisation du dispositif et la clé de cryptage ainsi déterminée immédiatement communiquée à la pastille protégée (10).

17. Procédé d'utilisation du dispositif de sécurité selon l'une quelconque des revendications 1 à 16 **caractérisé en ce que** lesdits moyens de mesure comprennent des plots (23) de mesure en contact électrique avec la résine semi-conductrice (40), les résistances étant mesurées par couples de plots (23) de mesure.

18. Procédé d'utilisation du dispositif de sécurité selon les revendications 3 et 17, **caractérisé en ce que** deux couples de plots (23) de mesure dont les résistances sont comparées ont un plot de mesure commun.

19. Procédé d'utilisation du dispositif de sécurité selon l'une des revendications 17 ou 18, **caractérisé en ce que** lesdits plots (23) de mesure sont groupés en bloc de 6 à 10.

**20.** Procédé d'utilisation du dispositif de sécurité selon l'une quelconque des revendications 17 à 19, **caractérisé en ce que** les plots (23) de mesure sont disposés à proximité des plots (30) de communication.

**21.** Procédé d'utilisation du dispositif de sécurité selon l'une quelconque des revendications 17 à 20, **caractérisé en ce que** les plots (20) de mesure ont une taille de l'ordre de grandeur de l'épaisseur de la résine semi-conductrice (40).

**22.** Procédé d'utilisation du dispositif de sécurité selon l'une quelconque des revendications 17 à 21, **caractérisé en ce que** les résistances à mesurer ont une longueur supérieure à la taille des plots (23) de mesure et comprise entre 1 et 20 fois l'épaisseur de la résine semi-conductrice (40).

**23.** Procédé d'utilisation du dispositif de sécurité selon l'une quelconque des revendications 1 à 22, **caractérisé en ce qu'**un anneau (50) de garde est formé entre les plots (30) de communication et au moins la projection de la surface de la pastille protégée (10) sur la pastille protectrice (20).

**Patentansprüche**

**1.** Sicherheitsvorrichtung zur Verhinderung des Zugriffs auf vertrauliche Informationen in einem Halbleiterchip (10) - dem sogenannten geschützten Chip - wobei besagte Vorrichtung besagten geschützten Chip (10) und einen zweiten Halbleiterchip (20) - den sogenannten schützenden Chip - umfasst und besagte Chips (10, 20) sich gegenüberstehen und miteinander über Kommunikationsstifte (30) verbunden sind, wobei der geschützte Chip (10) anhand des schützenden Chips (20) an externe Schaltkreise angeschlossen ist sowie darin, dass die beiden Halbleiterchips (10, 20) über ein Leiterharz (40) getrennt sind, das einen ungleichartigen spezifischen elektrischen Widerstand aufweist, wobei der schützende Chip (20) einerseits mit Mitteln zur Messung vielfältiger Widerstände durch das Leiterharz (40) und andererseits mit Mitteln zur Ermittlung - zumindest anhand der gemessenen Widerstände - eines kryptographischen Schlüssels, welcher dem geschützten Chip (10) zum Schutz besagter vertraulicher Informationen mitgeteilt werden soll, versehen ist.

**2.** Sicherheitsvorrichtung gemäss Patentanspruch 1, **gekennzeichnet dadurch, dass** besagte Ermittlungsmittel Mittel zur Verarbeitung der gemessenen Widerstände umfassen, welche einen kryptographischen Schlüssel - den sogenannten resistiven Schlüssel (Kr) - herstellen können.

**3.** Sicherheitsvorrichtung gemäss Patentanspruch 2, **gekennzeichnet dadurch, dass** besagte Verarbeitungsmittel Mittel zum Vergleich der gemessenen Widerstände sind.

**4.** Sicherheitsvorrichtung gemäss einem der Patentansprüche 2 oder 3, **gekennzeichnet dadurch, dass** besagte Ermittlungsmittel des weiteren aus einem Sekundärschlüssel (KE) bestehen, welcher in einem nichtflüchtigen Speicher des schützendes Chips gespeichert ist, wobei besagter kryptographischer Schlüssel, welcher dem geschützten Chip mitgeteilt werden soll, eine sich aus dem resistiven Schlüssel (Kr) und dem Sekundärschlüssel (KE) zusammensetzende Kombination ist.

**5.** Sicherheitsvorrichtung gemäss einem beliebigen Patentanspruch 1 bis 4, **gekennzeichnet dadurch, dass** der schützende Chip (20) über eine ihm eigene Information (CI) verfügt, welche eine Liste der zur Ermittlung des resistiven Schlüssels (Kr) zu verwendenden Widerstände definiert.

**6.** Sicherheitsvorrichtung gemäss Patentanspruch 5, **gekennzeichnet dadurch, dass** die Messmittel nur zur Messung der brauchbaren Widerstände, deren Liste von besagter Information (CI) abhängt, bestimmt sind.

**7.** Sicherheitsvorrichtung gemäss Patentansprüche 2 und 6, **gekennzeichnet dadurch, dass** die Ermittlungsmittel dazu bestimmt sind, den resistiven Schlüssel (Kr) mit besagter Information (CI) zu kombinieren, um einen zweiten resistiven kryptographischen Schlüssel (K'r) herzustellen.

**8.** Sicherheitsvorrichtung gemäss Patentanspruch 4, **gekennzeichnet dadurch, dass** die Messmittel und Ermittlungsmittel dazu bestimmt sind, bei der Initialisierung der Vorrichtung einen zweiten resistiven Schlüssel - den sogenannten Alarmschlüssel (KA) - herzustellen, welcher im besagten nichtflüchtigen Speicher des schützenden Chips (20) eingetragen ist, und darüber hinaus zur Messung besagten zweiten resistiven Schlüssels bei jeder Unterspannungssetzung der Vorrichtung bestimmt ist und um ihn mit dem gespeicherten Wert zu vergleichen, den Sekundärschlüssel (KE) bei negativem Vergleich zu löschen oder um den resistiven Schlüssel (Kr) im entgegengesetzten Fall zu ermitteln und dem geschützten Chip (10) mitzuteilen.

**9.** Sicherheitsvorrichtung gemäss Patentanspruch 4, **gekennzeichnet dadurch, dass** die Messmittel und Ermittlungsmittel dazu bestimmt sind, bei der Initialisierung der Vorrichtung einen zweiten resistiven Hilfsschlüssel (KS) herzustellen, welcher im besagten nichtflüchtigen Speicher des schützenden Chips (20), eingetragen ist sowie dadurch, dass die Rechenmittel zur Errechnung eines dritten Schlüssels (KD) anhand des resistiven Hilfsschlüssels (Kr) und dem zweiten resistiven Hilfsschlüssel (KS) in einer Weise vorgesehen, dass der resistive Schlüssel (Kr) anhand des zweiten resistiven Hilfsschlüssels (KS) und des dritten Schlüssels (KD) errechnet werden kann, wobei der dritte Schlüssel (KD) dem geschützten Chip (10) mitgeteilt und anschließend in dessen Speicher gespeichert wird.

10. Anwendungsverfahren der Sicherheitsvorrichtung gemäss einem beliebigen Patenanspruch 1 bis 9, **gekennzeichnet dadurch, dass** die Liste der zu verwendenden Widerstände über den schützenden Chip (20) bei der Initialisierung der Vorrichtung als Funktion der gemessenen Widerstände aufgestellt wird.

11. Anwendungsverfahren der Sicherheitsvorrichtung gemäss Patenanspruch 10, **gekennzeichnet dadurch, dass** besagte Liste in einem nichtflüchtigen Speicher des schützenden Chips (20) eingetragen ist.

12. Anwendungsverfahren der Sicherheitsvorrichtung gemäss Patenanspruch 11, **gekennzeichnet dadurch, dass** nach der Initialisierung der Vorrichtung jegliche Listeneintragung im besagten nichtflüchtigen Speicher inhibiert ist.

13. Anwendungsverfahren der Sicherheitsvorrichtung gemäss einem beliebigen Patenanspruch 10 bis 12, **gekennzeichnet dadurch, dass** besagte Liste Widerstände enthält, deren Werte weit genug auseinander liegen.

14. Anwendungsverfahren der Sicherheitsvorrichtung gemäss einem beliebigen Patenanspruch 10 bis 12, **gekennzeichnet dadurch, dass** besagte Liste Widerstände enthält, deren Werte derselben Größenordnung angehören.

15. Anwendungsverfahren der Sicherheitsvorrichtung gemäss einem beliebigen Patenanspruch 10 bis 12, **gekennzeichnet dadurch, dass** besagte Liste Widerstände enthält, deren Werte in einem gegebenen Bereich enthalten sind.

16. Anwendungsverfahren der Sicherheitsvorrichtung gemäss einem beliebigen Patenanspruch 1 bis 15, **gekennzeichnet dadurch, dass** die Messmittel und Ermittlungsmittel bei der Initialisierung der Vorrichtung implementiert werden und der auf diese Weise ermittelte kryptographische Schlüssel sofort dem geschützten Chip (10) mitgeteilt wird.

17. Anwendungsverfahren der Sicherheitsvorrichtung gemäss einem beliebigen Patenanspruch 1 bis 16, **gekennzeichnet dadurch, dass** besagte Messmittel Messstifte (23) in elektrischem Kontakt mit dem Halbleiterharz (40) umfassen, wobei die Widerstände je Messstiftpaar (23) gemessen werden.

18. Anwendungsverfahren der Sicherheitsvorrichtung gemäss Patenanspruch 3 und 17, **gekennzeichnet dadurch, dass** zwei Messstiftpaare (23), deren Widerstände verglichen werden, einen gemeinsamen Messstift haben.

19. Anwendungsverfahren der Sicherheitsvorrichtung gemäss einem beliebigen Patentanspruch 17 oder 18, **gekennzeichnet dadurch, dass** besagte Messstifte (23) zu 6er- bis 10er-Blöcken zusammengefasst sind.

20. Anwendungsverfahren der Sicherheitsvorrichtung gemäss einem beliebigen Patentanspruch 17 bis 19, **gekennzeichnet dadurch, dass** besagte Messstifte (23) in der Nähe der Kommunikationsstifte (30) angeordnet sind.

21. Anwendungsverfahren der Sicherheitsvorrichtung gemäss einem beliebigen Patentanspruch 17 bis 20, **gekennzeichnet dadurch, dass** die Messstifte (20) einer der Halbleiterharzdicke (40) entsprechenden Größenordnung entsprechen.

22. Anwendungsverfahren der Sicherheitsvorrichtung gemäss einem beliebigen Patentanspruch 17 bis 21, **gekennzeichnet dadurch, dass** die Länge der zu messenden Widerstände die Größe der Messstifte (23) überschreitet und zwischen 1 und 20 Mal der Halbleiterharzdicke (40) liegt.

23. Anwendungsverfahren der Sicherheitsvorrichtung gemäss einem beliebigen Patentanspruch 1 bis 22, **gekennzeichnet dadurch, dass** ein Schutzring (50) zwischen den Kommunikationsstiften (30) gebildet ist und mindestens der Oberflächenprojektion des geschützten Chips (10) auf dem schützenden Chip (20) entspricht.

**Claims**

1. Security device for preventing access to confidential information contained in a semiconductor chip (10), or protected chip, said device comprising the said protected chip (10) and a second semiconductor chip (20), or protective chip, said chips (10, 20) facing each other and being connected to each other by communication terminals (30), the protected chip (10) being connected to external circuits by the intermediary of the protective chip (20), the two semiconductor chips (10, 20) being separated by a conductor resin (40) having a non-homogeneous electrical resistivity, the protective chip (20) being provided with means for measuring a plurality of resistances through the conductor resin (40) and with means for determining, at least from the measured resistances, an encryption key intended to be communicated to the protected chip (10) to protect said confidential information.

2.	Security device according to claim 1 **characterized in that** said determination means comprise means for processing the measured resistances adapted to establish an encryption key, or resistive key (Kr).

3.	Security device according to claim 2 **characterized in that** said processing means are means for comparing measured resistances.

4.	Security device according to claim 2 or claim 3 **characterized in that** the determination means further comprise a secondary key (Ke) stored in a non-volatile memory of the protective chip, said encryption key intended to be communicated to the protected chip being a combination of the resistive key (Kr) and the secondary key (Ke).

5.	Security device according to any one of claims 1 to 4 **characterized in that** the protective chip (20) holds information (Ci) specific to it defining a list of resistances to be used to determine the resistive key (Kr).

6.	Security device according to claim 5 **characterized in that** the measuring means are only intended to measure the wanted resistances, the list of which depends on the said information (Ci).

7.	Security device according to claims 2 and 6 **characterized in that** the determination means are intended to combine the resistive key (Kr) with the said information (Ci) to constitute a second resistive encryption key (K'r).

8.	Security device according to claim 4 **characterized in that** the measuring means and the determination means are intended to establish a second resistive key, or "alarm" key (Ka), when the device is initialized, which key is written into said non-volatile memory of the protective chip (20), and are moreover intended to measure said second resistive key, each time the device is powered up, and to compare it with the memorized value, to erase the secondary key (Ke) in the event of a negative comparison result, or to determine the resistive key (Kr) and to communicate it to the protected chip (10) otherwise.

9.	Security device according to claim 4 **characterized in that** the measuring means and the determination means are intended to establish a back-up second resistive key (Ks) when the device is initialized, which key is written into said non-volatile memory of the protective chip (20), and **in that** calculation means are provided for calculating a third key (Kd) from the resistive key (Kr) and the back-up second resistive key (Ks) in such manner that the resistive key (Kr) can be calculated from the back-up second resistive key (Ks) and the third key (Kd), the third key (Kd) being communicated to the protected chip (10) and then stored in its memory.

10.	Method of use of the security device according to any one of claims 1 to 9 **characterized in that** the list of resistances to be used is established by the protective chip (20) at the time of initialization of the device in accordance with the measured resistances.

11.	Method of use of the security device according to claim 10 **characterized in that** said list is written into a non-volatile memory of the protective chip (20).

12.	Method of use of the security device according to claim 11 **characterized in that** any writing of lists into said non-volatile memory is prohibited after initialization of the device.

13.	Method of use of the security device according to any one of claims 10 to 12 **characterized in that** said list includes resistances having values that are sufficiently far apart.

14.	Method of use of the security device according to any one of claims 10 to 12 **characterized in that** said list includes resistances having values of the same order of magnitude.

15.	Method of use of the security device according to any one of claims 10 to 12 **characterized in that** said list includes resistances having values contained within a given range.

16.	Method of use of the security device according to any one of claims 1 to 15 **characterized in that** the measuring means and the determination means are activated as soon as the device is initialized and the encryption key determined in this way is communicated immediately to the protected chip (10).

17.	Method of use of the security device according to any one of claims 1 to 16 **characterized in that** said measuring means comprise measuring terminals (23) in electrical contact with the semiconductor resin (40), the resistances being measured at pairs of measuring terminals (23).

**18.** Method of use of the security device according to claims 3 and 17 **characterized in that** two pairs of measuring terminals (23) at which the resistances are compared have a common measuring terminal.

**19.** Method of use of the security device according to claim 17 or claim 18 **characterized in that** said measuring terminals (23) are grouped into blocks of 6 to 10.

**20.** Method of use of the security device according to any one of claims 17 to 19 **characterized in that** the measuring terminals (23) are near the communication terminals (30).

**21.** Method of use of the security device according to any one of claims 17 to 20 **characterized in that** the measuring terminals (20) have a size of the same order of magnitude as the thickness of the semiconductor resin (40).

**22.** Method of use of the security device according to any one of claims 17 to 21 **characterized in that** the resistances to be measured have a length greater than the size of the measuring terminals (23) and comprised between 1 and 20 times the thickness of the semiconductor resin (40).

**23.** Method of use of the security device according to any one of claims 1 to 22 **characterized in that** a guard ring (50) is formed between the communication terminals (30) and at least the projection of the surface of the protected chip (10) onto the protective chip (20).

FIG. 1

FIG. 2

FIG. 3

EP 0 800 209 B1

**FIG. 4**

**FIG. 5**